# EUROPEAN PATENT SPECIFICATION

(11) **EP 1 153 772 B1**
(45) Date of publication and mention of the grant of the patent: **28.12.2005**
(21) Application number: 01110993.1
(22) Date of filing: 07.05.2001
(51) Int. Cl.: B60G 9/00, B62D 53/02

(54) **Load carrying machine**
Maschine zur Beförderung von Lasten
Engin transportant des charges

(30) Priority: 13.05.2000 GB 0011471
(43) Date of publication of application: 14.11.2001
(73) Proprietor: J.C. BAMFORD EXCAVATORS LIMITED, Uttoxeter Staffordshire ST14 5JP (GB)
(72) Inventor: Ratcliffe, Simon John, Staffordshire ST14 5HP (GB); Walton, Kenneth Edward, Stoke-on-Trent ST4 2BU (GB); Deavall, Graham, Leek, Staffordshire ST13 7AH (GB)
(74) Representative: Lucking, David John

(56) References cited:
- WO-A-82/01518
- GB-A- 1 270 095
- US-A- 2 746 766
- US-A- 3 568 788
- US-A- 4 789 182
- US-A- 5 538 264

## Description

This invention relates to a load carrying machine and more particularly to a machine of the kind known as a dump truck.

A dump truck typically has a front part complete with an operator's cab or other work station, and an engine, and a rear part on which there is provided a container into which matter such as earth, hard-core, minerals, crops or the like may be dumped by for example, a loading machine. The rear part may be connected to the front part by a joint which permits of relative movement between the front and rear parts about a first generally upright axis, and about a generally horizontal axis which, when the first and second parts are generally aligned about the upright axis, extends generally longitudinally of the machine. Thus the machine is articulated, steering being effected by articulating the front part relative to the rear part.

The rear part typically has an axle which is rigid with a frame of the rear part, and the front part has an axle which is rigid with a frame of the front part. Thus in response to irregularities in the ground, the front and rear parts may relatively move about the horizontal axis of the joint between the two parts. Thus where the axles each carry a wheel at each end, four wheel contact with the ground may be maintained even on rough terrain.

Such a machine provides little comfort for an operator. Typically the only means of absorbing shocks is in the operator's seat. Moreover, although such a machine may operate satisfactorily on rough terrain at generally slow speeds, because no suspension is provided, the machine is only able to move relatively slowly on-road. US-A-4 789 182 shows a load carrying machine according to the preamble of claim 1 with a fluoted front axle.

According to the present invention we provide a load carrying machine having a front part and a rear part, the front part having a front frame, a power operated motive means mounted in or on the front frame, a front axle carrying ground engaging means, a transmission for transmitting drive from the power operated motive means to the ground engaging means, an operator's work station from where the machine is in use, controlled, and the rear part having a rear frame, and ground engaging means, and a container for containing matter to be transported, the front and rear parts of the machine being connected by a joint which permits of relative movement between the front and rear parts about a first generally upright axis, and about a horizontal axis which, when the first and second parts are generally aligned about the upright axis, extends generally longitudinally of the machine, wherein the front axle is suspended from the front frame by a suspension which includes a pair of links at either side of the body, one link of each pair being above the other relative to the ground, the upper link of each pair being pivotally connected at a first end relative to the front frame at a first position on the front frame and at a second end to the axle at a first position on the axle and the lower link of each pair being pivotally connected at a first end relative to the front frame at a second position on the front frame and at a second end to the axle at a second position on the axle, characterised in the first positions being above the second positions relative to the ground.

By providing the front part of the machine with such a suspension, several advantages have been realised.

First, comfort for an operator is improved as the suspension may absorb shocks. Second, faster on-road speeds may be attained. Moreover, the stability of the rear part of the machine on which matter is transported in the container, is not affected and utilising a suitable suspension, improved handling on rough off-road terrain may be attained as some shocks/loads on the front part may be absorbed by the suspension instead of being transmitted to the rear part.

Preferably the links lead from their first positions to their second positions in a direction of forward travel of the machine.

Such a suspension is non-reactive in that there is no significant change in the vertical loading on the ground engaging means of the front part in response to changes in the driving torque applied thereto.

Thus drive may be transmitted from the power operated motive means to the ground via ground engaging means such as wheels.

The front axle suspension may include a Panhard rod which extends laterally of the machine and is connected at one end to the front frame, and at the other end to the front axle.

To damp movement of the front axle relative to the front frame the suspension may include a hydraulic strut at each side of the front frame of the machine, movement of a piston in the strut being damped by a gas spring.

If desired a level sensing means may be provided to sense the distance between the front axle and the front frame at the respective sides of the machine, and there being a height regulating means for each level sensing means which is responsive to the respective level sensing means to adjust the distance between the front axle at the respective side of the machine and the front frame to a datum distance.

Preferably the rear axle is generally rigidly attached to the rear frame as in a conventional machine, whereby in response to irregularities in the ground, the rear part may move relative to the front part of the machine about the generally horizontal axis.

In one embodiment the front frame part may include a pair of generally longitudinally extending chassis members, and a sub-frame interconnecting the chassis members, the engine being mounted on the front frame towards a first side of the front frame, and the operator's station being positioned towards an opposite side of the front frame.

Although only the ground engaging means of the front of the machine may be driven, if desired the transmission may be arranged to transmit drive from the power operated motive means to the rear wheels e.g. via the joint connecting the front and rear machine parts.

In a typical machine to which the invention may be applied, the container is open topped and is tippable relative to the rear part of the machine to enable matter contained thereby to be discharged therefrom. For example the container may be tippable about a generally horizontal axis which lies transverse to the longitudinal axis of the rear part of the machine. However, if desired the container need not be open topped, but could be a tank of the like containing e.g. a liquid to be discharged therefrom e.g. by spraying.

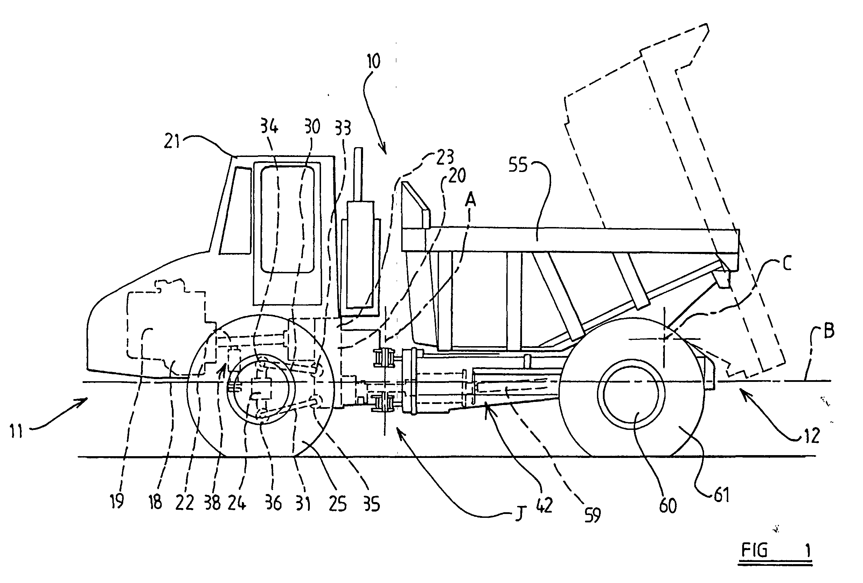

The invention will now be described with reference to the accompanying drawings in which
FIGURE 1 is a side illustrative view of a load carrying machine in accordance with the present invention;
FIGURE 2 is a more detailed fragmentary underside view of part of the machine of figure 1 with parts omitted for clarity.

Referring to the drawings, a load carrying machine 10 of the kind known as an articulated dump truck is shown. The machine has a front part 11 connected to a rear part 12 as hereinafter described.

The front part 11 includes a front frame or chassis 15, having a pair of generally parallel longitudinally extending chassis members 16, interconnected towards a front of the front part 11 by a front sub-frame 18. The sub-frame 18 carries a power operated propulsion means 19 which in this case is a diesel engine, and a transmission including a gearbox 20 to which drive is transmitted from the engine 19 via a propeller shaft 27, is carried on a rear sub-frame 23 which also inter connects the chassis members 16. The engine 19 is carried centrally of the machine 10, and towards a side of the machine 10 slightly rearwardly of the engine 19, there is provided an operator's station including a cab 21 from which the machine 10 may be controlled. The gearbox 20 is generally centrally located.

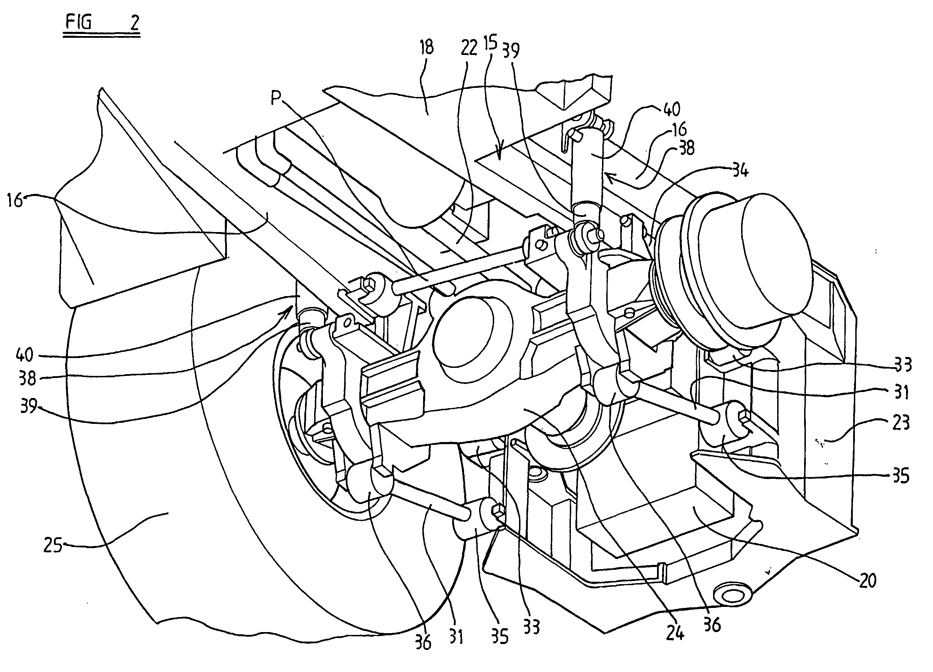

Below the chassis members 16 there is provided a front axle 24 adapted to carry at the outer ends thereof, ground engaging means being wheels 25 one of which is omitted in figure 2, for clarity. Drive is transmitted from the gearbox 20 of the transmission to the wheels 25 via the axle 24 as is well known in the art.

In accordance with the present invention, the front axle 24 is suspended from the chassis 15. The suspension includes a pair of links 30, 31 arranged one 30 above the other 31 at each side of the machine 10, the links 30, 31 being leading links. The upper links 30 are pivotally attached at their one ends 33 to the rear sub-frame 23, and at their second opposite ends 34 to the axle 24. Similarly the lower links 31 are pivotally attached at their one ends 35 to the sub-frame 18 and at their second opposite ends 36 to the axle 24. The one ends 33 of the upper links 30 are positioned at a level above the one ends 35 of the lower links 31, and the opposite ends 34 of the upper links 30 are positioned at a level above the opposite ends 34 of the lower links 31.

Also, between the axle 24 and the chassis 15, there are provided hydraulic struts 38, in this example, one at each side of the machine 10, pistons 39 of the struts 38 being connected to the axle 24 and cylinders 40 thereof to the front sub frame 18 of the chassis 15.

Hydraulic fluid may flow to and from the cylinders 40 in response to axle 24 movements relative to the chassis 15 in response to ground irregularities. The hydraulic fluid is transmitted to respective gas springs (not shown) which contain a diaphragm behind which trapped gas provides damping as hydraulic fluid is transmitted to the springs from the struts 38.

The front axle 24 suspension further includes a Panhard rod P which extends transversely of the chassis member 16, and is connected at one end relative to one of the chassis members 16, and at the other end relative to the front axle 24.

If desired a level sensing means may be provided to sense the distance between the front axle 24 and the front frame 15 at the respective sides of the machine 10, and there being a height regulating means for each level sensing means which is responsive to the respective level sensing means to adjust the distance between the front axle 24 at the respective side of the 10 and the front frame 15 to a datum distance.

The rear part 12 also has a chassis 42 which may include a pair of chassis members on which there is mounted a container 55 which, in this example is an open topped container into which matter may be dumped, for example by a loader machine.

The container 55 may be tippable relative to the chassis 42 about a generally horizontal axis C which extends generally perpendicularly to a longitudinal axis B of the rear part 12 of the machine 10.

Thus there may be provided one or more actuators such as hydraulic rams or alternatively electrical means to tip the container 55 to enable the container 55 contents to be discharged.

Below the chassis 42 of the rear part 12 there is provided an axle 60 which carries at the ends thereof, ground engaging means being a pair of wheels 61. The wheels preferably are driven wheels, drive being transmitted thereto from the engine 19 of the front part 11 of the machine 10 via a drive shaft 59 from the gearbox 20.

The axle 60 of the rear part 12 is provided rigidly with the rear frame 42.

The front 11 and rear parts 12 are connected together by a joint J which permits of relative movement between the front 11 and rear 12 parts about a generally upright axis A so that the front 11 and rear parts 12 are articulated to enable the machine 10 to be steered, and about a horizontal axis B which, when the first 11 and second 12 parts are generally aligned about the upright axis A as seen in the drawing, extends generally longitudinally of the machine 10.

Thus in the event that a ground irregularity causes one of the rear wheels 61 to lift, the rear part 12 may move relative to the front part 11 about the horizontal axis B, so that both rear wheels 61 may be maintained in contact with the ground. Steering is effected by operating one or more hydraulic actuators not shown, which extend between the front 11 and rear 12 parts, as is well known in the art.

By virtue of the front part 11 having a suspended front axle 24, shocks experienced by the front part 11 of the machine 10 need not be transmitted to the operator in the operator's station 21, or to the rear part 12 thus maintaining the stabilisation of the rear part 12.

Various modifications may be made without departing from the scope of the invention.

For example the particular geometry of the machine may be different to that shown, for example with the operator's cab 21 positioned more centrally of the front part 11 of the machine, and with the engine 19 positioned more towards the front or rear of the front part 11.

The container 55 of the rear part 12 of the machine need not be open topped and tippable as described with reference to the example of the drawing, but may be for example a tank for a liquid load. The container need not be an integral part of the rear part 12 of the machine 10 but may be a load carried by the rear frame 42.

Although in the example described, the rear part 12 has an axle 60 carrying wheels 61, in another arrangement, a ground engaging means which may be wheels 61 or even tracks, may otherwise be carried by the rear part 12.

Although in the example described, the rear axle 60 is rigid with the rear frame 42, in another example, to facilitate travelling on-road for example, this may be suspended, although to maintain stability during load handling, such suspension may need to be locked out.

The features disclosed in the foregoing description, or the following claims, or the accompanying drawings, expressed in their specific forms or in terms of a means for performing the disclosed function, or a method or process for attaining the disclosed result, as appropriate, may, separately, or in any combination of such features, be utilised for realising the invention in diverse forms thereof, as defined in the appended claims.

## Claims

1. A load carrying machine (10) having a front part (11) and a rear part (12), the front part (11) having a front frame (15), a power operated motive means (19) mounted in or on the front frame (15), a front axle (24) carrying ground engaging means (25), a transmission for transmitting drive from the power operated motive means (19) to the ground engaging means (25), an operator's work station (21) from where the machine (10) is in use, controlled, and the rear part (12) having a rear frame (42) and a ground engaging means (61), and a container (55) for containing matter to be transported, the front and rear parts (11, 12) of the machine (10) being connected by a joint (J) which permits of relative movement between the front and rear parts (11, 12) about a first generally upright axis (A), and about a horizontal axis (B) which, when the front and rear parts (11, 12) are generally aligned about the upright axis (A), extends generally longitudinally of the machine (10), wherein the front axle (24) is suspended from the front frame (15) by a suspension which includes a pair of links (30, 31) at either side of the machine (10), one link (30) of each pair being above the other (31) relative to the ground, the upper link (30) of each pair being pivotally connected at a first end (33) relative to the front frame (15) at a first position on the front frame (15) and at a second end (34) to the front axle (24) at a first position on the front axle (24) and the lower link (31) of each pair being pivotally connected at a first end (35) relative to the front frame (15) at a second position on the front frame (15) and at a second end (36) to the front axle (24) at a second position (36) on the front axle (24), **characterised in** the first positions being above the second positions relative to the ground.

2. A machine (10) according to claim 2 **characterised in that** the links (30, 31) lead from their first positions (33, 35) to their second positions (34, 36) in a direction of forward travel of the machine (10).

3. A machine (10) according to claim 1 or claim 2 **characterised in that** the suspension is non-reactive **in that in that** there is no significant change in the vertical loading on the ground engaging means (25) of the front part (11) in response to changes in the driving torque applied thereto.

4. A machine according to any one of the preceding claims **characterised in that** to damp movement of the front axle (24) relative to the front frame (11) the suspension includes a hydraulic strut (38) at each side of the front frame (11) of the machine (10), movement of a piston in the strut being damped by a gas spring.

5. A machine according to claim 4 **characterised in that** a level sensing means is provided to sense the distance between the axle (24) and the front frame (11) at the respective sides of the machine (10), and there being a height regulating means for each level sensing means which is responsive to the respective level sensing means to adjust the distance between the axle (24) at the respective side of the machine (10) and the front frame (11) to a datum distance.

6. A machine according to any one of the preceding claims **characterised in that** the rear axle (60) is generally rigidly attached to the rear frame (42) whereby in response to irregularities in the ground, the rear part (12) may move relative to the front part (11) of the machine (10) about a generally horizontal axis (B).

7. A machine according to any one of the preceding claims **characterised in that** the front frame part (11) includes a pair of generally longitudinally extending chassis members (16), and a sub-frame (18) interconnecting the chassis members (16), the engine (19) being mounted on the front frame (11) towards a first side of the front frame (11), and the operator's station (21) being positioned towards an opposite side of the front frame (11).

8. A machine according to any one of the preceding claims **characterised in that** the container (55) is open topped and is tippable relative to the rear part (12) of the machine (10) to enable matter contained thereby to be discharged therefrom.

9. A machine according to claim 8 **characterised in that** the container (55) is tippable about a generally horizontal axis which lies transverse to a longitudinal axis (B) of the rear part (12) of the machine (10).

## Patentansprüche

1. Maschine zum Transportieren von Lasten (10), die mit einem vorderen Teil (11) und einem hinteren Teil (12) versehen ist, wobei der vordere Teil (11) einen vorderen Rahmen (15) aufweist, ein kraftgetriebenes Antriebsmittel (19), das in oder auf dem vorderen Rahmen (15) angebracht ist, eine vordere Achse (24), die mit dem Boden in Eingriff stehende Mittel (25) trägt, ein Getriebe zum Übertragen von Antriebskraft von dem kraftgetriebenen Antriebsmittel (19) zu den mit dem Boden in Eingriff kommende Mitteln (25), und eine Arbeitsstation (21) für eine Bedienungsperson, von der aus die Maschine (10) im Gebrauch gesteuert wird, wobei der hintere Teil (12) einen hinteren Rahmen (42) und mit dem Boden in Eingriff stehende Mittel (61) aufweist, und einen Behälter (55) zum Aufnehmen des Materials, das transportiert werden soll, wobei der vordere und hintere Teil (11, 12) der Maschine (10) durch eine Verbindung (J) miteinander verbunden sind, die eine relative Bewegung zwischen dem vorderen und hinteren Teil (11, 12) um eine erste, im wesentlichen senkrechte Achse (A) zuläßt, und um eine horizontale Achse (B), die sich dann, wenn der vordere und hintere Teil (11, 12) im wesentlichen bezüglich der senkrechten Achse (A) ausgerichtet sind, im wesentlichen in Längsrichtung der Maschine (10) erstreckt, wobei die vordere Achse (24) von dem vorderen Rahmen (15) durch eine Aufhängung aufgehängt ist, die ein Paar von Verbindungsstücken (30, 31) an jeder Seite der Maschine (11) umfaßt, wobei sich ein Verbindungsstück (30) eines jeden Paars oberhalb des anderen (31) relativ zu dem Boden befindet, wobei das obere Verbindungsstück (30) eines jeden Paars an einem ersten Ende (33) schwenkbar relativ zu dem vorderen Rahmen (15) an einer ersten Position auf dem ersten Rahmen (15) verbunden ist und an einem zweiten Ende (34) mit der vorderen Achse (24) an einer Position auf der vorderen Achse (24), und wobei das untere Verbindungsstück (31) eines jeden Paars an einem ersten Ende (35) schwenkbar relativ zu dem vorderen Rahmen (15) an einer zweiten Position auf dem vorderen Rahmen (15) verbunden ist und an einem zweiten Ende (36) mit der vorderen Achse (24) an einer zweiten Position (36) auf der vorderen Achse (24), **dadurch gekennzeichnet, daß** sich die ersten Positionen relativ zum Boden oberhalb der zweiten Positionen befinden.

2. Maschine (10) nach Anspruch 2, **dadurch gekennzeichnet, daß** die Verbindungsstücke (30, 31) von ihren ersten Positionen (33, 35) zu ihren zweiten Positionen (34, 36) in einer Richtung der Vorwärtsfahrt der Maschine (10) führen.

3. Maschine (10) nach Anspruch 1 oder 2, **dadurch gekennzeichnet, daß** die Aufhängung in dem Sinne nicht reaktiv ist, als daß keine signifikante Veränderung in der vertikalen Belastung auf den mit dem Boden in Eingriff stehenden Mitteln (25) des vorderen Teils (11) ansprechend auf Veränderungen des auf diese aufgebrachten Antriebsdrehmoments erfolgt.

4. Maschine nach einem der vorangehenden Ansprüche, **dadurch gekennzeichnet, daß** die Aufhängung zum Zwecke der Dämpfung einer Bewegung der vorderen Achse (24) relativ zu dem vorderen Rahmen (11) eine hydraulische Strebe (38) auf jeder Seite des vorderen Rahmens (11) der Maschine (10) aufweist, wobei eine Bewegung eines Kolbens in der Strebe durch eine Gasfeder gedämpft wird.

5. Maschine nach Anspruch 4, **dadurch gekennzeichnet, daß** ein Mittel zum Erfassen der Höhe vorgesehen ist, um den Abstand zwischen der Achse (24) und dem vorderen Rahmen (11) auf den jeweiligen Seiten der Maschine (10) zu erfassen, und wobei ein Mittel zum Regeln der Höhe für jedes einzelne Mittel zum Erfassen der Höhe vorgesehen ist, welches auf das jeweilige Mittel zum Erfassen der Höhe anspricht; um den Abstand zwischen der Achse (24) auf der entsprechenden Seite der Maschine (10) und dem vorderen Rahmen (11) auf einen vorgegebenen Abstand einzustellen.

6. Maschine nach einem der vorangehenden Ansprüche, **dadurch gekennzeichnet, daß** die hintere Achse (60) im wesentlichen starr an dem hinteren Rahmen (42) befestigt ist, so daß sich, ansprechend auf Unregelmäßigkeiten im Boden, der hintere Teil (12) relativ zu dem vorderen Teil (11) der Maschine (10) um eine im wesentlichen horizontale Achse (B) bewegen kann.

7. Maschine nach einem der vorangehenden Ansprüche, **dadurch gekennzeichnet, daß** der vordere Teil des Rahmens (11) ein Paar von im wesentlichen in Längsrichtung verlaufenden Fahrgestellteilen (16) aufweist, wobei ein Unterrahmen (18) die Fahrgestellteile (16) miteinander verbindet, wobei der Motor (19) auf dem vorderen Rahmen (11) in Richtung auf eine erste Seite des vorderen Rahmens (11) angebracht ist, und wobei die Station (21) der Bedienungsperson in Richtung auf eine gegenüberliegende Seite des vorderen Rahmens (11) positioniert ist.

8. Maschine nach einem der vorangehenden Ansprüche, **dadurch gekennzeichnet, daß** der Behälter (55) oben offen ist und relativ zu dem hinteren Teil (12) der Maschine (10) gekippt werden kann, um zu ermöglichen, daß darin enthaltenes Material aus diesem abgegeben werden kann.

9. Maschine nach Anspruch 8, **dadurch gekennzeichnet, daß** der Behälter (50) um eine im wesentlichen horizontale Achse gekippt werden kann, die quer zu einer Längsachse (B) des hinteren Teils (12) der Maschine (10) angeordnet ist.

## Revendications

1. Engin porteur de charge (10) ayant une partie avant (11) et une partie arrière (12), la partie avant ayant un châssis avant (15), un moyen de déplacement à commande à moteur (19) monté dans ou sur le châssis avant (15), un essieu avant (24) portant des moyens de contact avec le sol (25), une transmission destiné à transmettre l'entraînement du moyen de déplacement à commande à moteur (19) vers les moyens de contact avec le sol (25), un poste de travail d'opérateur (21) depuis lequel l'engin (10) est utilisé, et commandé, et la partie arrière (12) ayant un châssis arrière (42) et des moyens de contact avec le sol (61), et un conteneur (55) destiné à contenir une matière qui doit être transportée, les parties avant et arrière (11, 12) de l'engin (10) étant raccordées par un assemblage (J) qui permet un mouvement relatif entre les parties avant et arrière (11, 12) autour d'un axe généralement vertical (A), et autour d'un axe horizontal (B) qui, lorsque les parties avant et arrière (11, 12) sont généralement alignées autour de l'axe vertical (A), s'étend généralement dans le sens de la longueur de l'engin (10), dans lequel l'essieu avant (24) est suspendu au châssis avant (15) grâce à une suspension qui inclut une paire de liaisons (30, 31) de chaque côté de l'engin (10), une liaison (30) de chaque paire se trouvant au-dessus de l'autre (31) par rapport au sol, la liaison supérieure (30) de chaque paire étant raccordée pour pivoter au niveau d'une première extrémité (33) par rapport au châssis avant (15) en une première position sur le châssis avant (15) et au niveau d'une seconde extrémité (34) par rapport à l'essieu avant (24) en une première position sur l'essieu avant (24) et la liaison inférieure (31) de chaque paire étant raccordée pour pivoter au niveau d'une première extrémité (35) par rapport au châssis avant (15), en une seconde position sur le châssis avant (15) et au niveau d'une seconde extrémité (36) par rapport à l'essieu avant (24) en une seconde position (36) sur l'essieu avant (24), **caractérisé en ce que** les premières positions se trouvent au-dessus des secondes positions par rapport au sol.

2. Engin (10) selon la revendication 1, **caractérisé en ce que** les liaisons (30, 31) mènent de leurs premières positions (33, 35) à leurs secondes positions (34, 36) dans le sens du trajet vers l'avant de l'engin (10).

3. Engin (10) selon la revendication 1 ou 2, **caractérisé en ce que** la suspension est non-réactive, **en ce qu'**il n'y a aucun changement significatif dans le chargement vertical sur les moyens de contact avec le sol (25) de la partie avant (11) en réponse aux changements dans le couple d'entraînement appliqué à ceux-ci.

4. Engin selon l'une quelconque des revendications précédentes, **caractérisé en ce que** le mouvement d'amortissement de l'essieu avant (24) par rapport au châssis avant (11), la suspension inclut un vérin de calage (38) de chaque côté du châssis avant (11) de l'engin (10), le mouvement d'un piston dans le vérin de calage étant amorti par un ressort à gaz.

5. Engin selon la revendication 4, **caractérisé en ce qu'**un moyen de détection de niveau est fourni pour détecter la distance entre l'essieu (24) et le châssis avant (11) sur les côtés respectifs de l'engin (10), et un moyen de régulation de la hauteur étant fourni pour chaque moyen de détection de niveau qui répond au moyen de détection de niveau respectif pour ajuster la distance entre l'essieu (24) sur le côté respectif de l'engin (10) et le châssis avant (11) jusqu'à une distance de référence.

6. Engin selon l'une quelconque des revendications précédentes, **caractérisé en ce que** l'essieu arrière (60) est fixé généralement de manière rigide au châssis arrière (42), grâce à quoi, en réponse aux irrégularités du sol, la partie arrière (12) peut se déplacer par rapport à la partie avant (11) de l'engin (10), autour d'un axe généralement horizontal (B).

7. Engin selon l'une quelconque des revendications précédentes, **caractérisé en ce que** la partie de châssis avant (11) inclut une paire d'éléments de châssis (16) qui s'étendent généralement longitudinalement, et un châssis auxiliaire (18) reliant entre eux les éléments de châssis (16), le monteur (19) étant monté sur le châssis avant (11), vers un premier côté du châssis avant (11), et le poste de l'opérateur (21) étant positionné vers un côté opposé du châssis avant (11).

8. Engin selon l'une quelconque des revendications précédentes, **caractérisé en ce que** le conteneur (55) est ouvert sur le dessus et peut basculer par rapport à la partie arrière (12) de l'engin (10) pour permettre à la matière contenue d'être ainsi vidée de celui-ci.

9. Engin selon la revendication 8, **caractérisé en ce que** le conteneur (55) peut basculer autour d'un axe généralement horizontal qui est placé transversalement par rapport à un axe longitudinal (B) de la partie arrière (12) de l'engin (10).
